# EUROPEAN PATENT APPLICATION

(11) **EP 1 770 603 A1**
(43) Date of publication of application: **04.04.2007**
(21) Application number: 05109156.9
(22) Date of filing: 03.10.2005
(51) Int. Cl.: G06K 19/07, B29C 41/20

(54) **Encapsulated transponder and method for manufacturing the same**

(71) Applicant: Assa Abloy Identification Technology Group AB, 107 23 Stockholm (SE)
(72) Inventor: Robadey, Jean-Miguel, 1615, Bossonens (CH); Meilland, André, 1680 Romont (CH)
(74) Representative: Grosfillier, Philippe

(57) **Abstract**

The invention concerns an encapsulated transponder (1) having an integrated circuit (2), an antenna (3) and one or more electrical connections (4) between the integrated circuit (2) and the antenna (3). At least the part of the transponder (1) comprising the electrical connections (4) is embedded within a capsule (6) which is removable without damaging the electrical connections (4). Also claimed is a method for the production of a such transponder (1).

## Description

### Field of the Invention

The invention relates to a transponder as installed primarily in maps or marks for identification of objects of various types, but also of persons or animals, and more particularly to a method of encapsulating such transponders.

### State of the art

Transponders are well known in the art and generally comprise an electrical circuit having an antenna connected to an integrated circuit. The transponder is responsive to a received radio frequency signal and produces a radio frequency signal.

Beside the connection of the two electric elements of the electrical circuit, a key step of the manufacture of a transponder is the encapsulation of said electrical circuit in order to protect it from mechanical shocks and from soiling, to ensure a durable mechanical connection between the two elements, and to give it a size allowing it to be better handled.

To ensure a perfect functionality of the transponder, the packaging has to be totally adapted to the nature of the final application and to specifications defined by the user. The final product can be, as non-limiting examples, a glass mini-tube, a plastic coin token or a contactless smart card. Due to the popularity of the RFID technology in an increasing number of fields of activity, there are more and more demands for special types of packaging.

It is not always reliable on the economical point of view for a transponder manufacturer to carry out himself all the production steps up to the final product. It can be of high interest to effectuate the final packaging steps, for example:
- in the proximity or even by the customer
- in a separate packaging manufacture unit
- where the manufacturing costs are lower
- where the packaging material is cheaper and available in great quantity

To allow the transport and manipulation of the electrical circuit of the transponder, it must be protected against mechanical (such as shocks, transport vibrations, pressure, stress), chemical (as moisture, oxidation, corrosion) or other types of aggressions. Different types of such pre-packaging are used to support and encapsulate the electrical circuit.

In the case of contactless smart cards, where packaging dimensions are defined by strong ISO standards, it is usual to use flexible plastic sheets, generally of PVC, as a support to deposit the electrical circuit thereon. Additionally, a cover sheet can be added (by lamination, injection, deposition or curing) to fulfill the encapsulation. Such inlays, that are about 350 micrometers thick, are industry standards.

On the other hand, the encapsulation must be adapted to the structure the electrical circuit of the transponder, especially to the nature of the connections between the antenna coil and the integrated circuit. One of the method to produce transponders is to connect the antenna coil directly onto the integrated circuit. It is called direct bonding. For example, in the case of a conductive wire as antenna coil, one can use thermocompression (with the aid of a punch) to cause the metals to interact, and the conductive wire to adhere to the surface of a pump of the integrated circuit.

However, the conductive wire, being filament-like and of small dimensions, may undergo shearing or fatigue caused by the filament pressing against the edge of the chip. Such direct bonding configurations are particulary sensitive to mechanical stress and vibrations, as the integrated circuit can be supported solely the conductive wire.

There exist a number of processes to solve this problem, which involve the encapsulation and immobilization of the soldering points between the integrated circuit and its corresponding coils. However, in the great majority of the cases these processes result in very rigid systems, causing the breaking of the contact on the conductor itself and thus disqualifying these methods for use in the manufacture of transponders.

Furthermore, encapsulations are expensive in practice because they involve a sequence of steps to prepare the integrated circuits for encapsulation. Very often these are heat-involving processes, capable of compromising the operation of the integrated circuits, which are sensitive to sudden temperature changes.

U.S. Pat. No. 6,687,131 describes a transponder, whose the electrical circuit is encapsulated in a polyamide thermoplastic resin (hot glue) by low pressure injection. The electrical circuit is placed in a bottom mold half. Once the mold has been closed by applying a top mold half, liquid hot glue is injected formed between the mold halves at approximately 200 degrees C at low pressure about 20 bar. The process of manufacture exposes the circuits to less stresses than conventional injection molding. As the mold do not normally to be heated, it can be made of inexpensive material such as plastic or aluminum and can be incorporated the transponder itself. Advantageously, the transponder is protected from pressure and temperature especially during further processing, as for example conventional injection molding process, and the components are held firmly in place.

Such solutions have a number of drawbacks. In particular, they are multi-steps processing that slow down the whole manufacture process. Their conditions (temperature, pressure and chemicals) are different of these of the electronic assembly part and strong measures have to be taken to avoid interaction in the production area. They use a lot of additional material, as whole sheets of support or molds.

Another solution is proposed in Brasil Pat. No. 0202961. With the aim to protect the conductor-to-chip connections, a process was developed which involved an immersion in photopolymerizable resin and ultraviolet radiation. This process results in a protective membrane which provides considerable protection to the connections and excellent product durability and reliability. It implies a reduced number of manufacture steps and is extremely simple as far as the machinery used is concerned and therefore is of particular feasibility.

Unfortunately, such a process cannot be used for pre-packaging, as the resulting cured capsule is almost impossible to release without damaging the electronic circuit. That makes it incompatible (chemically, mechanically) with particular final uses, final packaging. The protection capsule increases (even slightly) the weight and dimensions of the transponder. Photpolymerizable resins are expensive substances that are not chemically inert (previous to curing) and needed special measures to be used in manufacture environment. The use of UV-curing radiation also implied the use of special protection measures of the manufacture personal and devices.

### Summary of the invention

It is an aim of the present invention to improve the known devices and processes.

It is also an object of the invention to provide an electrical circuit of a transponder having an embedding capsule.
It is another object of the invention to provide a simple and inexpensive method for manufacturing such a transponder.
These and other objects are achieved by the features of transponder of claim 1 and by the method of production of such a transponder defined in claim 6.

In the invention, the electrical connections between the integrated the integrated circuit and the antenna is embedded within a capsule that supports and secures the electrical connections. The capsule can be malleable, also with a capacity to absorb small amounts of mechanical energy without transmitting them to the electrical connections, providing a good protection against stresses, shocks and vibrations common during transportation and shipping.

The capsule is easily removable without damaging the electrical connections. That means that there is a large amount of different and simple (mechanical or chemical) techniques that allow to detach the transponder of the capsule without damaging the electrical connections. For example, the material of the capsule is preferably soluble in a large variety of common and cheap solvents (that are neutral against the other elements of the transponder) allowing to easily wash out the capsule material . This allows to use the capsule as a pre-packaging means suitable to protect the transponder during shipping, transport and storage, without being an insurmountable obstacle for any final packaging treatments or uses.

In accordance with another embodiment of the invention, there is provided a capsule embedding at least a part of the integrated circuit and a part of the antenna in such way that the capsule holds the integrated circuit and the antenna in a specific mutual relative position. Due to the malleability of the capsule, an interesting property is that the specific mutual relative position is not fixed definitively, but could occasionally be carefully changed by manual handling or mechanical processes.

Such a capsule is very useful for types of transponder where before the encapsulation, the integrated circuit is supported only by the antenna. That is more particulary the case when the antenna is a conductive wire that is connected by direct bonding to the integrated circuit.

A particular advantageous embodiment of the invention is to use wax or paraffine as capsule material. Wax is a very cheap material, chemically inert and easy to handle, solid or melted. It is malleable at normal ambient temperature, has a reasonably low melting point and has a relatively low viscosity when melted (unlike many plastics). Chemically, wax is insoluble in water (is even hydrophobic), but is soluble in most organic solvents, including alcohols, ethers, and esters.

The invention also relates to a method of encapsulation of a transponder characterized in that at least the part of the transponder comprising the electrical connections between the integrated circuit and the antenna is dipped in a coating liquid in such a way to create a capsule that support and secure the electrical connections, and that the said capsule can be easily removed without damaging the electrical connections. The dipping method per se is simple and well known in the art. It has been long used to create protective covering of electronic elements. The difference is that here the result is a capsule that does not only protect the electronics against crashes and chemical attacks, but also mechanically supports and secures the electrical connection between the integrated circuit and the antenna of the transponder. In many types of transponders the antenna and the integrated circuit have no common support. Due to this, the electrical connection is particulary sensitive to any mechanical stress or vibration that tends to change the position of the antenna relative to the integrated circuit.

A particular advantageous embodiment of the invention is to heat the transponder at a temperature higher than the fusion temperature of the coating liquid. This allows a faster and more uniform embedding of the transponder by the coating liquid.

An other particular advantageous embodiment of the invention is to carry out the control of RFID functionalities of the transponder by use of a RFID reader simultaneously to the dipping step.

Another embodiment of the invention relates to a method of encapsulation of a transponder by dipping in a coating liquid and cure it by exposing it to a flux of air at ambient temperature during a given time. The solidification and finishing of the capsule do not need any complex manufacture steps, drying furnace, special radiation apparatus (as UV) or even molds of any kinds.

In the case of melted coating liquid, as melted wax or paraffine, this exposition phase is use only to cool down at least the external envelop of the capsule.

### Detailed description of the invention

The invention will be better understood in the text below together with the following drawings:
Figures 1 illustrates the method for the production of a transponder according to the invention
Figure 2A and 2B shows a first type of transponder according to the invention
Figures 3A to 3B show a second type of transponder according to the invention

### List of numerical references :

- 1: transponder
- 2: integrated circuit (IC)
- 3: antenna
- 4: electrical connections
- 5: coating liquid
- 6: capsule
- 7: holding mean
- 8: coating basin
- 9: thermocouple
- 10: heating body
- 11: laser detection mean
- 12: hot air blower
- 13: RFID reader antenna
- 14: container

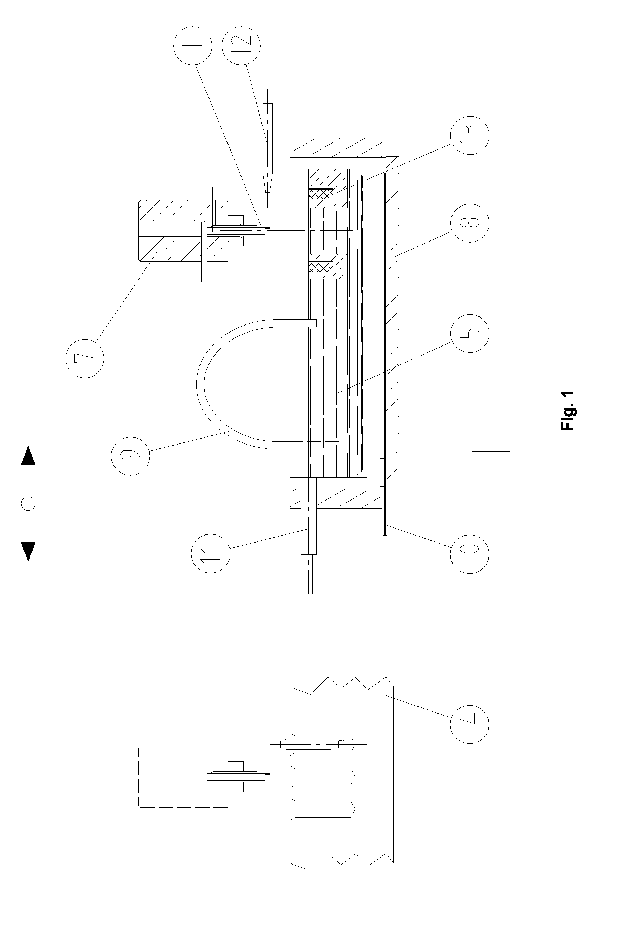

The embodiment shown in figure 1 comprises holding mean **7,** holding the transponder **1** in a vertical position above the coating basin **8.** The holding mechanism could be for example a combined system magnet / vacuum.

The wax is preferably a high temperature wax such as bees wax or a high temperature paraffin meaning the melting temperature of the paraffin is high. Concretely, a wax referenced Micro No 17 of ETS Jacques Vernet, with a fusion temperature of 86°C has been used. To allow a high homogeneity of the melted wax **5** during the process, the wax is maintained at a temperature of about 110°c by mean of a regulation temperature circuit comprising a thermocouple **9,** a regulator (not shown) and a graphite heating body **10.**

A laser detection mean **11** is used to detect if the coating liquid **5** is below a given level. In such case a signal is emitted that indicates that more wax has to be added in the basin **8.** The addition of wax can be operated manually by an operator or by automatic means.

Well known to the man of the art is the necessity that after the bonding of the antenna to the integrated circuit, the transponder has to be heated to allow a stress release. That can be carried out by hot air blower **12** for example. In case of this invention, this heating step can be slightly adjusted for the additional functionality to pre-heat the transponder to a temperature higher than the fusion temperature of the coating liquid **5.** A Leister hot air blower **12** of the type Diode PID has been use to heat the transponder **1** during 1 second with an air flux at a temperature of 280°C and pressure of 8 mbars. An important achievement of a such system is to reach an uniform temperature of the transponder. For this purpose, a multi-nozzle blower can be advantageously used.

After the pre-heating step, the holding mean **7** is moved down in a given position in order to dip at least the part of the transponder **1** comprising the electrical connections **4** between the integrated circuit **2** and the antenna **3.** The deeper the transponder **1** will be moved down in the coating liquid **5,** the bigger will be the part of the transponder **1** embedded in the resulting capsule **6.** The dipping time is below 1 second. It depends on the type of material (type of wax) used and of if the transponder **1** is pre-heated or not.

Once the dipping is terminated, the holding mean **7** is brought back to its original position, by which the transponder **1** is held outside of the coating liquid **5.** A part of melted wax is now adhering to the transponder **1** in the form of an embedding film that forms the desired capsule **6.** In order to reach a homogeneous and mechanically stronger state, the yet hot wax has to be cooled down rapidly. To avoid any damages to the electrical components, this cannot be achieved by dipping the transponder **1** in cold water. The proposed solution is to submit the transponder **1** with its hot capsule **6** to a flux of pressurized air at ambient temperature for about 1 second. Such air pressurized means are well know in the art and are not represented on the figure.

Additionally represented in the figure 1 is a RFID reader antenna **13,** which is mounted inside of the coating basin **8.** This is positioned in order to be able to control the RFID functionalities of the transponder **1** during the dipping step. Another preferred embodiment, that is well known of the art, would preferably be used in which the reader antenna **13** can be placed on (integrated in) the holding mean 7, in order to effectuate the control for example on the move during the transport of the embedded transponder **1** to the container **14.** Alternatively, the RFID reader antenna **13** can be mounted above the basin **8,** in order to be able to effectuate the control during (simultaneously to) the pre-heating step, or during the solidification step.

After the solidification step, the holding mean **7** is moved until a container **14,** like a honeycombed plate, where the transponder **1** is being deposited in a defined position, allowing an easy re-gripping subsequently.

We are now going to illustrate some embodiments of a transponder according to the invention, by describing two particular type of transponders.

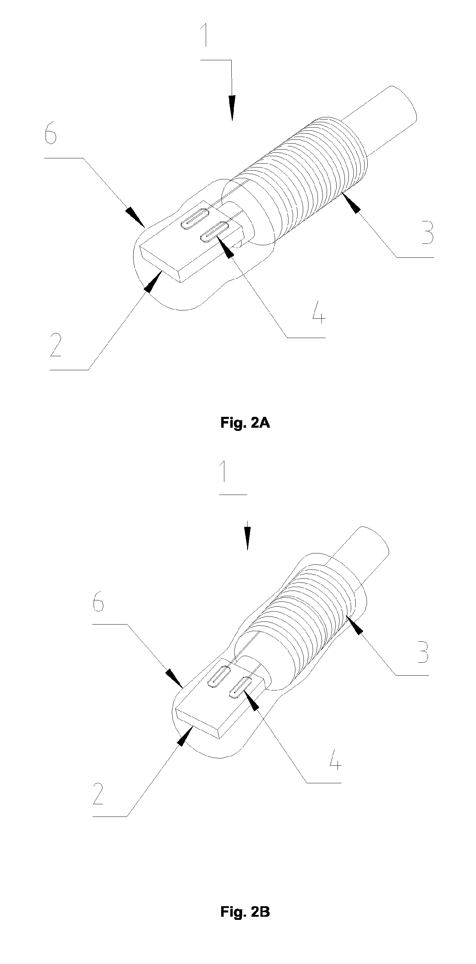

In the figures 2A and 2B, rod unit type transponders **1** according to the invention are represented. This type of transponder **1** is characterised in that the antenna **3,** formed by a conductive wire has a cylindrical form and is wound around a ferrite rod. The integrated circuit **2** is directly bonded to the antenna **3,** as the extremities of the antenna wire **3** are directly bonded on pads of the chips **2.** These connections **4** ensure both the electrical functionalities of the transponder **1** and the mechanical holding of the integrated circuit **2.**

In figure 2A, the capsule **6** is embedding the integrated circuit **2** and solely the extremities of the wire antenna **3.** In figure 2B, the capsule **6** is additionally embedding the totality of the antenna **3.** The variation of the coverage of the antenna **3** by the capsule **6** can be easily controlled by the dipping depth of the rod unit transponder **1** in the coating liquid.

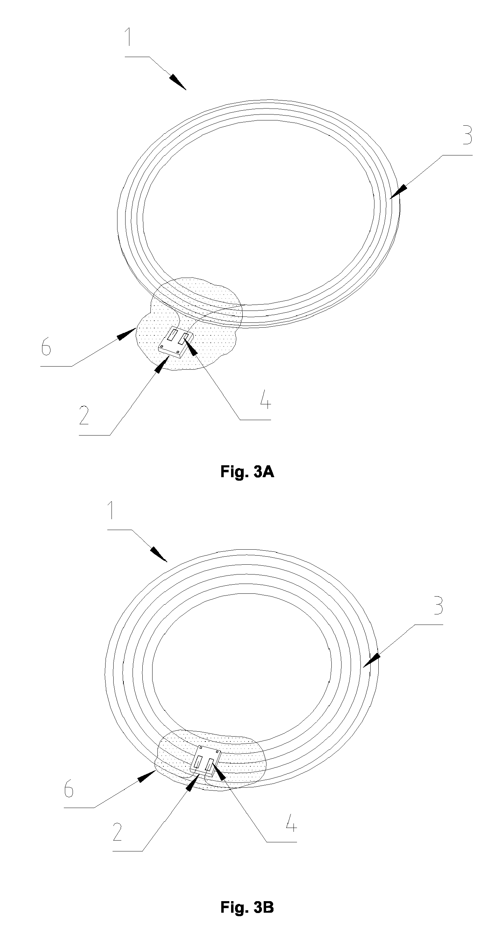

In the figures 3A and 3B concentric disc shape transponders 1 according to the invention are shown. Such transponders comprise a disk shape antenna coil **3,** having conductive wires wound to form an air-core coil, and integrated circuit directly bonded to both extremities of the antenna **2** by the connections **4.** The integrated circuit **2** can be positioned alternatively outside, as on the figures, or inside of the disc shape antenna **3** (an embodiment that is not illustrated here).

In the figure 3A, the capsule **6** is embedding solely the extremities of the antenna wire **3** and the integrated circuit **2** that is positioned outside of the disc shape antenna **3.** In the figure 3B, previous to the dipping, the wire has been bent in order to position the integrated circuit **2** on the disc shape antenna **3.** In this last embodiment, the capsule **6** is embedding the integrated circuit **2** and the part of the disc shape antenna **3** on which it is positioned.

## Claims

1. Transponder (1) having an integrated circuit (2), an antenna (3) and one or more electrical connections (4) between the integrated circuit (2) and the antenna (3), wherein at least the part of the transponder (1) comprising the electrical connections (4) is embedded within a capsule (6) that support and secure the electrical connections (4), the capsule (6) being removable without damaging the electrical connections (4).

2. Transponder according to Claim 1, wherein at least a part of the integrated circuit (2) and a part of the antenna (3) are embedded in the capsule (6) in such way that the capsule (6) holds the integrated circuit (2) and the antenna (3) in a specific relative position.

3. Transponder according to any one of the previous Claims, wherein the antenna (3) is directly connected onto the integrated circuit (4).

4. Transponder according to any one of the previous Claims, wherein the antenna (3) is a conductive wire.

5. Transponder according any one of the previous Claims, wherein the capsule is malleable.

6. Transponder according to any one of the previous Claims, wherein the capsule (6) is made of wax or paraffine.

7. Method for the production of a transponder (1) according to any one of Claims 1 to 6, wherein said capsule (6) is created by dipping at least the part of the transponder (1) comprising the electrical connections (4) in a coating liquid (5), in such a way that said capsule (6) supports and secure the electrical connections (4), and is removable without damaging the electrical connections (4).

8. Method according to Claim 7, wherein before the dipping step the transponder (1) is pre-heated to a temperature higher than the fusion temperature of coating liquid (5).

9. Method according to any one of Claims 7 to 8, wherein in order to obtain the capsule (6), the part of coating liquid (5) embedding the transponder (1) after the dipping step is solely exposed to a pressurised flux of air to solidify.

10. Method according to any one of Claims 7 to 9, wherein, the RFID functionalities of the transponder (1) are controlled by a RFID reader during the dipping step,

11. Method according to any one of Claims 7 to 10, wherein the coating liquid (5) is melted wax or paraffine.
